# EUROPEAN PATENT APPLICATION

(11) **EP 4 015 184 A1**
(43) Date of publication of application: **22.06.2022**
(21) Application number: 21191954.3
(22) Date of filing: 18.08.2021
(51) Int. Cl.: B29C 45/00

(54) **METHOD FOR PROVIDING ACCESSORIES FOR WASHBASINS AND SINKS IN GENERAL, PARTICULARLY OF THE TYPE OF COVERS AND SHELVES**

(30) Priority: 17.12.2020 IT 202000031166
(71) Applicant: Elleci S.p.A., 04014 Pontinia, Z.I. Mazzocchio LT (IT)
(72) Inventor: TRAVERSA, Graziano, 04019 TERRACINA LT (IT); TRAVERSA, Giancarlo, 04019 TERRACINA LT (IT)
(74) Representative: Modiano, Micaela Nadia

(57) **Abstract**

A method for providing accessories for washbasins and sinks in general, particularly of the type of covers and shelves, that comprises the following steps:
- providing a first mold part (2a, 2b) which reproduces in negative form visible surfaces (6a, 6b) of at least one accessory (1a, 1b) for washbasins and sinks in general;
- providing a second mold part (3a, 3b) which reproduces in negative form hidden surfaces (7a, 7b) of the accessory (1a, 1b);
- mating the first mold part (2a, 2b) with the second mold part (3a, 3b);
- injecting material in a melted state, with which the accessory (1a, 1b) is made, into the cavity defined between the first mold part (2a, 2b) and the second mold part (3a, 3b);
- solidifying the material, and
- opening the first mold part (2a, 2b) and the second mold part (3a, 3b), with consequent extraction of the at least one accessory (1a, 1b).

The first mold part (2a, 2b) and the second mold part (3a, 3b) comprise respectively two surfaces (4a, 5a, 4b, 5b) which can be substantially mutually superimposed and are oriented substantially parallel to the orientation of the resting surface of the accessory (1a, 1b) in its normal use.

## Description

The present invention relates to a method for providing accessories for washbasins and sinks in general, particularly of the type of covers and shelves.

In the kitchen sink sector, washbasins and sinks made of composite material, both hot acrylic and cold polyester, have the peculiar characteristic, due to their specific process of manufacture via polymerization and consequent shrinkage of the material, of exhibiting in the end product a "good" side, the visible side, and a "bad" side, on the back.

On the rear side in fact, the molding process tends to show all the shrinkage of material and the consequent surface defects that are created following such shrinkage.

Recent market trends increasingly demand that makers supply, together with the composite sink or wash basin, drain covers, aesthetic inserts or even accessories (such as slats, shelves and other functional elements) made of the same material as the sink/washbasin.

In more detail, if the cover or the accessory in general were to be made by molding using a cavity mold, ideally there would be a visible side with acceptable quality and a "bad" side which however is hidden.

However, the conventional production method just described is not devoid of drawbacks, among which is the fact that at the perimeter points of the accessory, or of the accessories if multiple molding is used, visible traces would remain of the operations to cut the perimeter of the piece.

In fact, at the point where the piece is cut for edging, the material always undergoes an alteration both of color and of surface texture, owing to the action of cutting/polishing the piece.

This edged area would therefore not be suitable for a visible installation.

The aim of the present invention consists in devising a method for providing an accessory for washbasins or sinks in general, in which the visible surfaces are free from any trace of operations for removing flash or cutting.

Within this aim, an object of the present invention consists in devising a production method that is capable of offering the widest guarantees of reliability and safety in use.

Another object of the present invention consists in devising a production method that can be carried out with technologies that are per se known and which therefore is of low cost.

This aim and these and other objects which will become better apparent hereinafter are achieved by a method for providing accessories for washbasins and sinks in general, particularly of the type of covers and shelves, characterized in that it comprises the following steps:
- providing a first mold part which reproduces in negative form visible surfaces of at least one accessory for washbasins and sinks in general, said at least one accessory being delimited in space by a plurality of surfaces, of which at least one is perimetric and/or higher than a resting surface of said at least one accessory in its normal use and of which at least one is lower than said resting surface, said visible surfaces comprising said at least one perimetric and/or higher surface of said at least one accessory;
- providing a second mold part which reproduces in negative form hidden surfaces of said at least one accessory, said hidden surfaces comprising said at least one lower surface of said at least one accessory; said first mold part and said second mold part comprising respectively two surfaces which can be substantially mutually superimposed and are oriented substantially parallel to the orientation of said resting surface of said at least one accessory in its normal use;
- mating said first mold part with said second mold part along a mating direction that is substantially normal to said surfaces, said first mold part and said second mold part being shaped so as to define a cavity, when mated, that corresponds to the volume of said at least one accessory;
- injecting material in the melted state, of which said at least one accessory is made, into said cavity;
- solidifying said material in the melted state;
- opening said first mold part and said second mold part, with consequent extraction of said at least one accessory.

Further characteristics and advantages of the invention will become better apparent from the detailed description of a preferred, but not exclusive, embodiment of a method for providing accessories for washbasins and sinks in general, particularly of the type of covers and shelves, which is illustrated by way of non-limiting example with the aid of the accompanying drawings wherein:
Figures 1 and 2 are two perspective views, respectively from above and from below, of a first accessory for washbasins and sinks in general according to the present invention;
Figure 3 is a perspective view from below of a first mold part according to the present invention, for obtaining a plurality of accessories like the one shown in Figures 1 and 2;
Figure 4 is a perspective view from above of a second mold part according to the present invention, for obtaining a plurality of accessories like the one shown in Figures 1 and 2;
Figures 5 and 6 are two perspective views, respectively from above and from below, of a second accessory for washbasins and sinks in general according to the present invention;
Figure 7 is a perspective view from below of a first mold part according to the present invention, for obtaining a plurality of accessories like the one shown in Figures 5 and 6;
Figure 8 is a perspective view from above of a second mold part according to the present invention, for obtaining a plurality of accessories like the one shown in Figures 5 and 6.

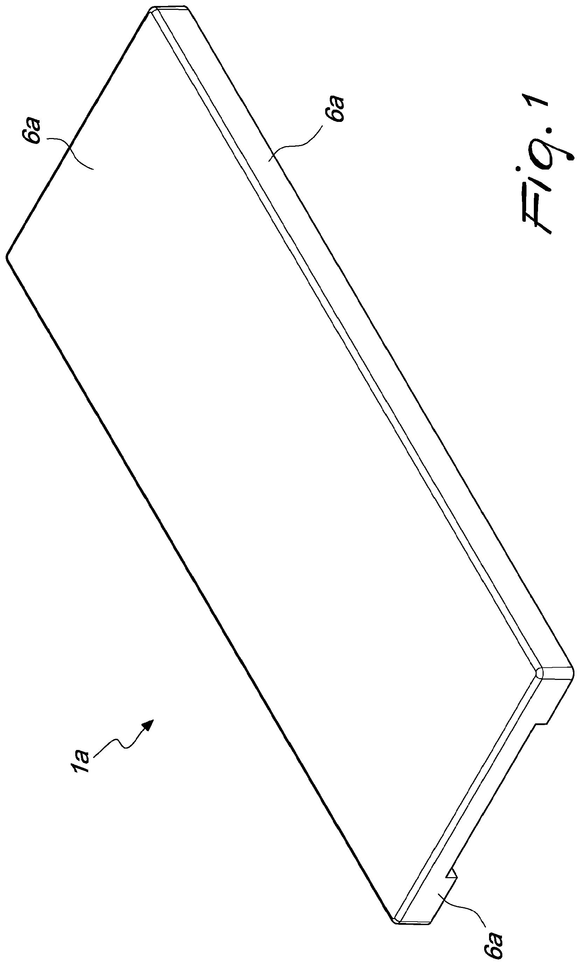

With particular reference to Figures 1, 2, 5 and 6, two accessories for washbasins or sinks in general are shown, generally designated by the reference numerals 1a and 1b, which consist of two covers for washbasins; the first is rectangular in plan view and the second is circular in plan view.

Both the accessories 1a and 1b, which more generally can consist of covers for drains, aesthetic inserts, slats, shelves and any other accessory for washbasins and sinks in general, are two objects that are delimited in space by a plurality of surfaces, of which at least one is perimetric and/or higher than its resting surface during their normal use, and of which at least one is lower than the resting surface.

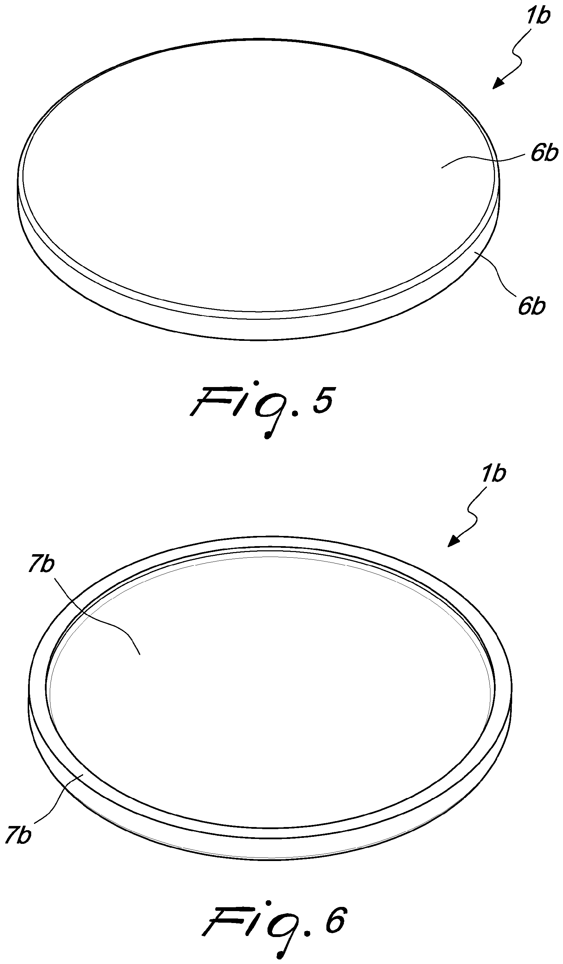

In more detail, according to the invention, the perimetric and higher surfaces, shown in Figures 1 and 5, as will be better described below, are free from defects caused by machining operations for cutting and/or removing flash, and are visible during its normal use.

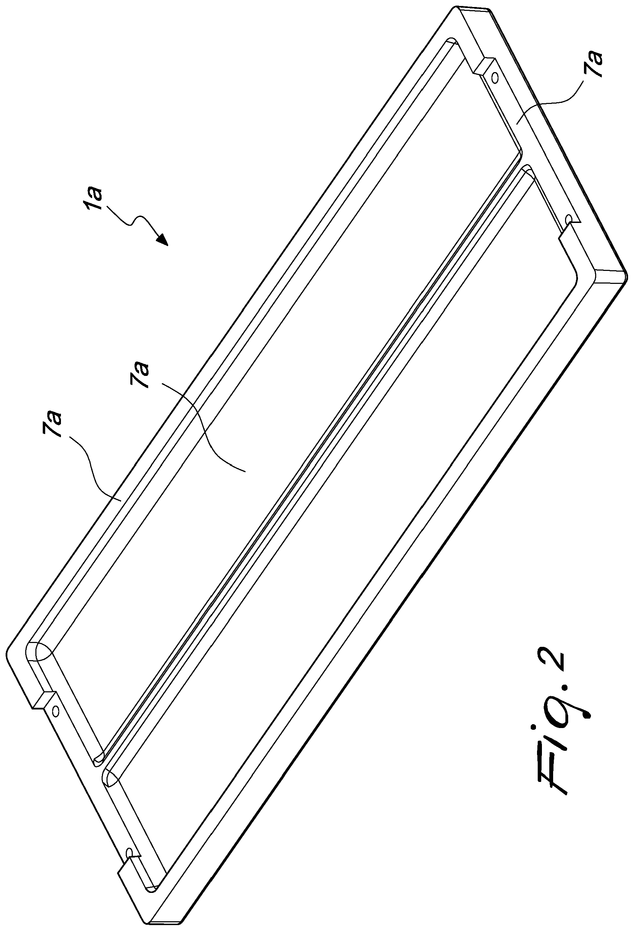

Differently, the lower surfaces, shown in Figures 2 and 6, as will be better described below, are hidden during their normal use and may exhibit defects caused by machining operations for cutting and/or removing flash.

According to the invention, the method for providing accessories for washbasins and sinks in general, particularly of the type of covers and shelves, comprises the following steps.

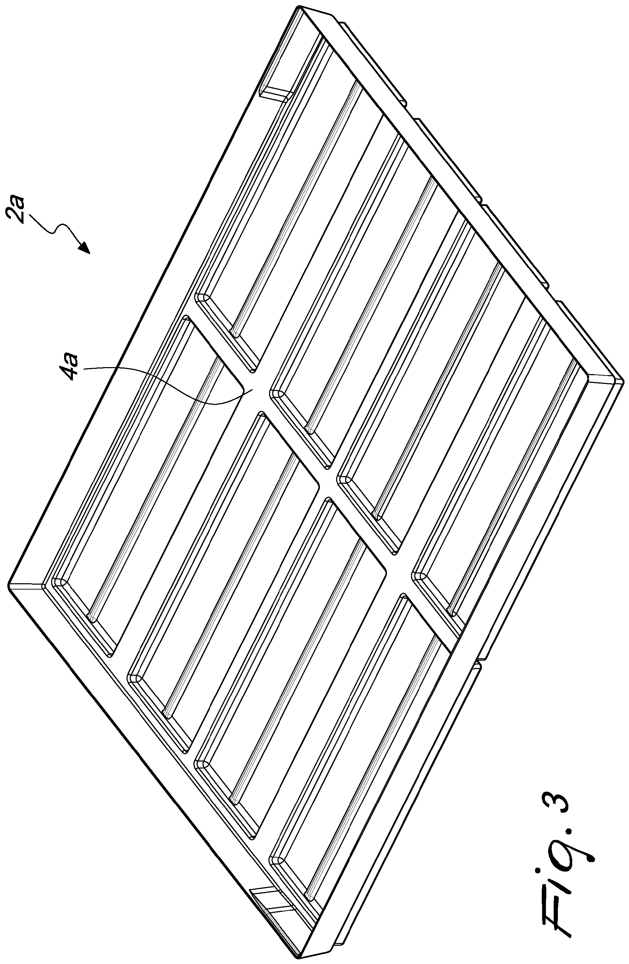

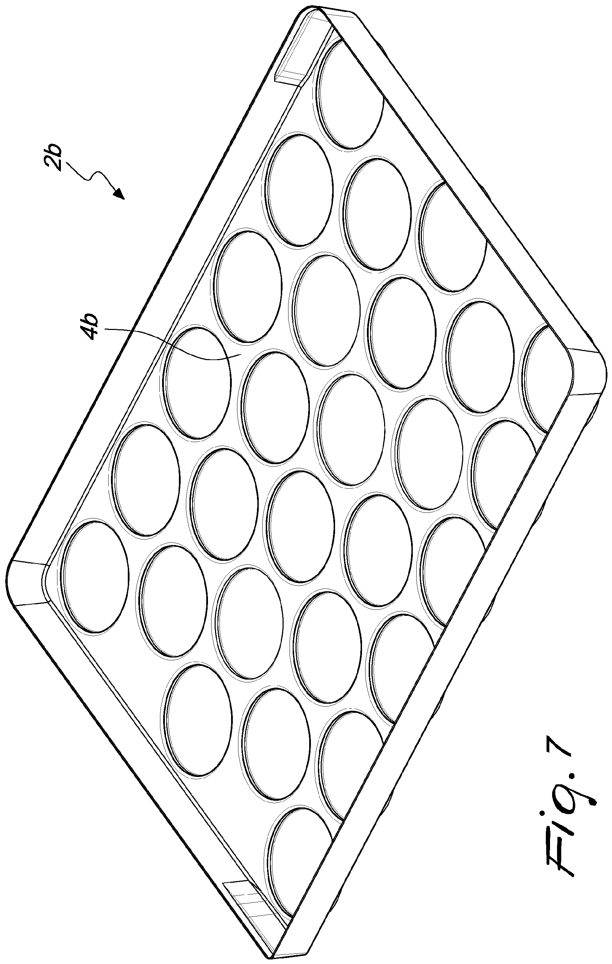

With particular reference to Figures 3 and 7, initially a first mold part 2a or 2b is provided which reproduces in negative form the visible surfaces 6a and 6b of at least one accessory 1a or 1b or of a plurality of accessories 1a or 1b if multiple pieces are being molded.

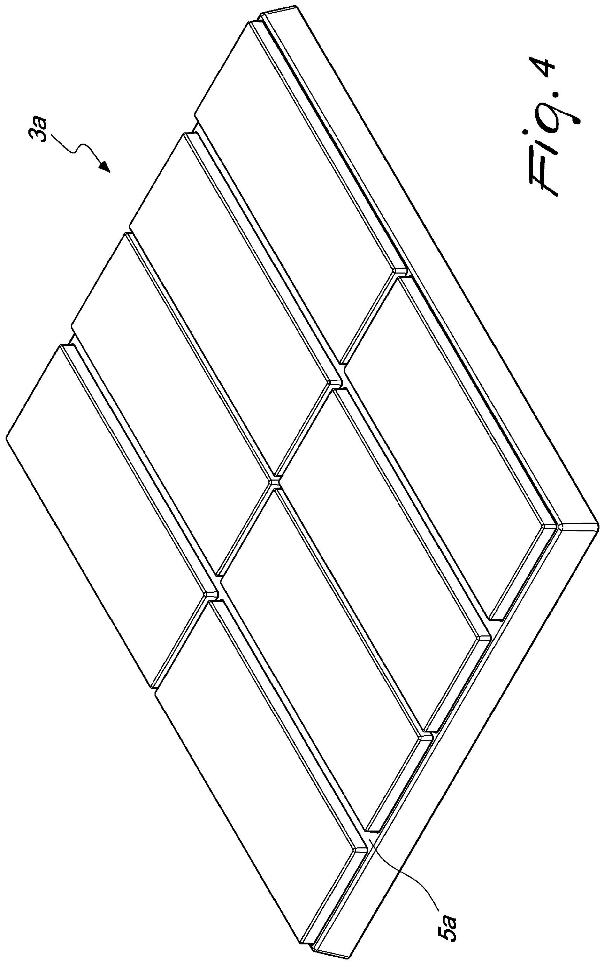

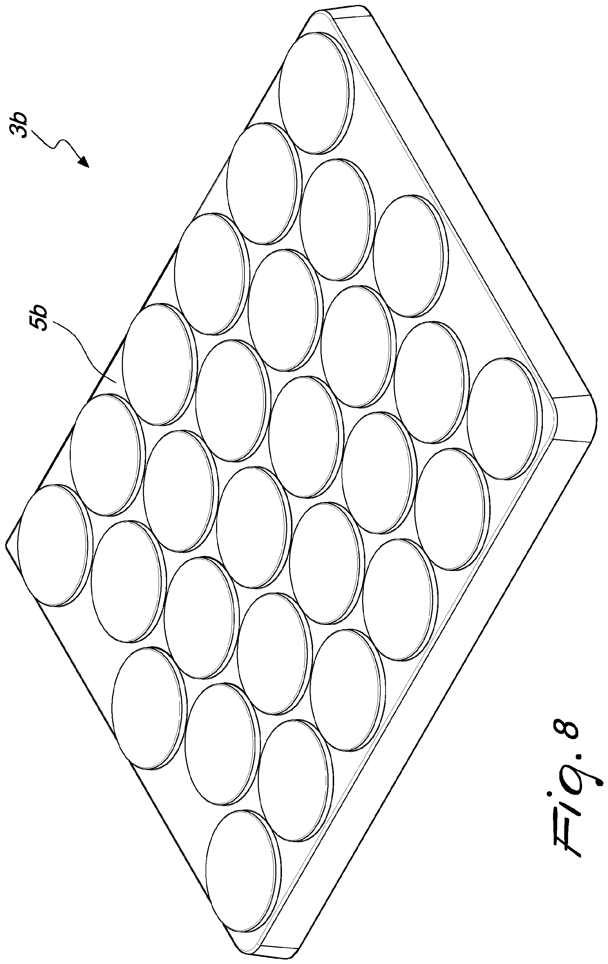

With particular reference to Figures 4 and 8, simultaneously a second mold part 3a and 3b is provided, which reproduces in negative form the hidden surfaces 7a and 7b of the accessory or accessories 1a and 1b.

Advantageously, both the first mold parts 2a and 2b and the second mold parts 3a and 3b comprise respectively two surfaces 4a, 4b and 5a, 5b which can be substantially mutually superimposed and are oriented substantially parallel to the orientation of the resting surface of the accessory or accessories 1a and 1b during their normal use.

Conveniently, if multiple molding is used, the accessories 1a or 1b are connected to each other at their lower surfaces via a substantially flat portion of material which is parallel to the surfaces 4a, 4b and 5a, 5b.

Subsequently, the first mold parts 2a and 2b are mated with the respective second mold parts 3a and 3b along a direction for coupling that is substantially normal to the surfaces 4a, 4b and 5a, 5b.

Conveniently, the first mold parts 2a and 2b and the respective second mold parts 3a and 3b are shaped so as to define, when mutually mated, a cavity that corresponds to the volume of the accessory or accessories 1a and 1b.

At this point the method proceeds to inject the material in the melted state, of which the accessories 1a and 1b are made, into the cavity.

Then the method proceeds to solidify the material, which being a composite polymeric material consists of the polymerization thereof, and then moves on to open the first mold part 2a or 2b and the second mold part 3a or 3b with consequent extraction of the accessory or accessories 1a and 1b.

Whether it is a single mold or a multiple mold, the method then proceeds to the steps of edging and polishing each accessory 1a or 1b.

In more detail, if it is a multiple mold, there is a step of separating each accessory 1a or 1b and the steps of edging and of polishing take place at the substantially flat portion of material so as to separate the accessories 1a and 1b from each other without working on, and therefore damaging, the visible surfaces 6a and 6b.

In practice it has been found that the method for providing accessories for washbasins and sinks in general achieves the set aim and objects, since it makes it possible to obtain an accessory made of composite material that is free from any superficial defect due to machining operations after molding.

In fact, the portion of the accessory that will be cut is located in the non-visible portion of that accessory during its normal use.

In other words, the result is that the higher part of the accessory and all the perimeter walls are of excellent quality.

Both the non-visible side and the area where the piece has been edged are located on the rear side only.

The method for providing accessories for washbasins and sinks in general, thus conceived, is susceptible of numerous modifications and variations all of which are within the scope of the appended claims.

Thus, for example, the surfaces 4a, 4b and 5a, 5b can be flat but preferably they could be convex, in order to allow any water to drain off at the sides.

Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102020000031166 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing accessories for washbasins and sinks in general, particularly of the type of covers and shelves, **characterized in that** it comprises the following steps:
- providing a first mold part (2a, 2b) which reproduces in negative form visible surfaces (6a, 6b) of at least one accessory (1a, 1b) for washbasins and sinks in general, said at least one accessory (1a, 1b) being delimited in space by a plurality of surfaces, of which at least one is perimetric and/or higher than a resting surface of said at least one accessory (1a, 1b) in its normal use and of which at least one is lower than said resting surface, said visible surfaces (6a, 6b) comprising said at least one perimetric and/or higher surface of said at least one accessory (1a, 1b);
- providing a second mold part (3a, 3b) which reproduces in negative form hidden surfaces (7a, 7b) of said at least one accessory (1a, 1b), said hidden surfaces (7a, 7b) comprising said at least one lower surface of said at least one accessory (1a, 1b);
said first mold part (2a, 2b) and said second mold part (3a, 3b) comprising respectively two surfaces (4a, 5a, 4b, 5b) which can be substantially mutually superimposed and are oriented substantially parallel to the orientation of said resting surface of said at least one accessory (1a, 1b) in its normal use;
- mating said first mold part (2a, 2b) with said second mold part (3a, 3b) along a mating direction that is substantially normal to said surfaces (4a, 5a, 4b, 5b), said first mold part and said second mold part (3a, 3b) being shaped so as to define, when mutually mated, a cavity that corresponds to the volume of said at least one accessory (1a, 1b);
- injecting material in the melted state, of which said at least one accessory (1a, 1b) is made, into said cavity;
- solidifying said material in the melted state;
- opening said first mold part (2a, 2b) and said second mold part (3a, 3b), with consequent extraction of said at least one accessory (1a, 1b).

2. The method according to claim 1, **characterized in that** it comprises the steps of edging and polishing said at least one accessory (1a, 1b).

3. The method according to claim 1 or 2, **characterized in that** said at least one accessory (1a, 1b) comprises a plurality of accessories (1a, 1b) for washbasins and sinks in general which are mutually connected at their lower surfaces by way of a portion of material that is substantially flat and parallel to said surfaces (4a, 5a, 4b, 5b) and **characterized in that** it comprises a step of separating said accessories (1a, 1b) and **in that** said steps of edging and polishing said at least one accessory (1a, 1b) take place at said substantially flat portion of material so as to separate said accessories (1a, 1b) from each other without acting on said visible surfaces (6a, 6b).

4. The method according to one or more of the preceding claims, **characterized in that** said melted material is a composite material and **in that** said step of solidification comprises the polymerization of said composite material.

5. The accessory (1a, 1b) for washbasins or sinks in general, obtainable according to one or more of the preceding claims, delimited in space by a plurality of surfaces, of which at least one is perimetric and/or higher than its resting surface during its normal use and of which at least one is lower than said resting surface; said at least one perimetric and/or higher surface being free from defects caused by machining operations for cutting and/or removing flash and being visible during said normal use; said at least one lower surface being hidden during said normal use.

6. The accessory according to claim 5, **characterized in that** it is comprised in the group constituted by covers for drains, aesthetic inserts, slats and shelves.
